(19) Europäisches Patentamt
European Patent Office
Office européen des brevets

(11) EP 4 439 728 A2

(12) # EUROPEAN PATENT APPLICATION

(43) Date of publication:
**02.10.2024 Bulletin 2024/40**

(21) Application number: **24166658.5**

(22) Date of filing: **27.03.2024**

(51) International Patent Classification (IPC):
***H01M 4/525*** *(2010.01)* ***H01M 10/0525*** *(2010.01)*
***H01M 10/0567*** *(2010.01)* ***H01M 10/0568*** *(2010.01)*

(52) Cooperative Patent Classification (CPC):
**H01M 10/0567; H01M 4/525; H01M 10/0525; H01M 10/0568;** H01M 2300/004; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 CN 202310340512**

(71) Applicant: **Ningde Amperex Technology Ltd.**
**Ningde City, Fujian 352100 (CN)**

(72) Inventors:
- **ZHANG, Shan**
**Ningde City, Fujian Province, People s Republic of China, 352100 (CN)**
- **LIU, Jianyu**
**Ningde City, Fujian Province, People s Republic of China, 352100 (CN)**
- **JIANG, Lanjie**
**Ningde City, Fujian Province, People s Republic of China, 352100 (CN)**
- **TANG, Chao**
**Ningde City, Fujian Province, People s Republic of China, 352100 (CN)**

(74) Representative: **Icosa**
**83 avenue Denfert-Rochereau**
**75014 Paris (FR)**

(54) **ELECTROCHEMICAL APPARATUS AND ELECTRONIC APPARATUS**

(57) An electrochemical apparatus includes a positive electrode plate and an electrolyte. The positive electrode plate includes a positive electrode current collector and a positive electrode material layer disposed on at least one surface of the positive electrode current collector, the positive electrode material layer includes a positive electrode active material, and the positive electrode active material contains cobalt and nickel, where based on a mass of the positive electrode active material, a mass percentage of the nickel is B%, where $0.05 \leq B \leq 20$. The electrolyte includes lithium bis(oxalato)borate and 1,3,6-hexanetricarbonitrile, where based on a mass of the electrolyte, a mass percentage of the lithium bis(oxalato)borate is C% and a mass percentage of the 1,3,6-hexanetricarbonitrile is D%. The electrochemical apparatus satisfies $0.1 \leq (C + D)/B \leq 23$. The electrochemical apparatus provided in this application can balance its energy density and high-temperature cycling performanc

EP 4 439 728 A2

## Description

### TECHNICAL FIELD

This application relates to the field of electrochemical technologies, and in particular, to an electrochemical apparatus and an electronic apparatus.

### BACKGROUND

Lithium-ion batteries have been widely used in consumer batteries due to their advantages such as high specific energy, light weight, and long cycle life. With the development of electronic products toward lightness and portability, people impose higher requirements for energy density, high-temperature cycling, charging speed, and the like of batteries.

To further increase the energy density of lithium-ion batteries, other elements can be doped into the positive electrode active material and/or the negative electrode active material, for example, doping nickel into the positive electrode active material $LiCoO_2$. With Ni doped, the gram capacity of the positive electrode active material can be increased, thereby increasing the energy density of lithium-ion batteries. In addition, nickel is cost-effective and environmentally friendly. However, after nickel is doped, the inherent lithium-nickel mixing hinders the migration of $Li^+$ and accelerates the structural collapse of the positive electrode active material during cycling, making it difficult to balance the energy density and high-temperature cycling performance of lithium-ion batteries.

### SUMMARY

This application is intended to provide an electrochemical apparatus and an electronic apparatus, so as to balance energy density and high-temperature cycling performance of the electrochemical apparatus. Specific technical solutions are as follows:

It should be noted that in the invention content of this application, an example in which a lithium-ion battery is used as an electrochemical apparatus is used to illustrate this application. However, the electrochemical apparatus of this application is not limited to the lithium-ion battery.

A first aspect of this application provides an electrochemical apparatus, including a positive electrode plate and an electrolyte. The positive electrode plate includes a positive electrode current collector and a positive electrode material layer disposed on at least one surface of the positive electrode current collector, the positive electrode material layer includes a positive electrode active material, and the positive electrode active material contains cobalt and nickel, where based on a mass of the positive electrode active material, a mass percentage of the nickel is B%, where $0.05 \leq B \leq 20$. In some embodiments of this application, $0.1 \leq B \leq 10$. For example, the mass percentage B% of the nickel may be 0.05%, 0.1%, 0.5%, 1%, 3%, 5%, 8%, 10%, 12%, 15%, 18%, 20%, or a value within a range defined by any two of these values. The electrolyte includes lithium bis(oxalato)borate (LiBOB) and 1,3,6-hexanetricarbonitrile (HTCN), where based on a mass of the electrolyte, a mass percentage of the lithium bis(oxalato)borate is C% and a mass percentage of the 1,3,6-hexanetricarbonitrile is D%. The electrochemical apparatus satisfies $0.1 \leq (C + D)/B \leq 23$. In some embodiments of this application, $0.1 \leq (C + D)/B \leq 4.6$. For example, the value of (C + D)/B may be 0.1, 0.5, 1, 3, 4.6, 5, 8, 10, 13, 15, 18, 20, 23, or a value within a range defined by any two of these values.

According to the electrochemical apparatus provided in this application, when the mass percentage of the nickel is within the foregoing range, an electrochemical apparatus with high energy density can be obtained. With both the lithium bis(oxalato)borate and the 1,3,6-hexanetricarbonitrile introduced into the electrolyte, the lithium bis(oxalato)borate and the 1,3,6-hexanetricarbonitrile can both participate in construction of a cathode electrolyte interface film (CEI film), suppressing dissolution of transition metals (for example, nickel, cobalt, and manganese) from the positive electrode active material. In addition, boron in the lithium bis(oxalato)borate can bind with oxygen in the positive electrode active material and nitrogen atoms in the 1,3,6-hexanetricarbonitrile can bind with high-valence nickel ions (for example, $Ni^{2+}$ and $Ni^{3+}$), so as to reduce occupation of $Li^+$ sites by high-valence nickel ions, improving structural stability of the positive electrode active material. Moreover, the lithium bis(oxalato)borate can stabilize a lithium salt in the electrolyte, reduce generation of substances such as HF, suppress side reactions at interfaces of the positive electrode plate and a negative electrode plate, and form a solid electrolyte interface film (SEI film) on a surface of the negative electrode plate, alleviating damage of the dissolved transition metals to a negative electrode active material in the negative electrode plate. Therefore, this alleviates the issues of affecting lithium ion transport and unstable structure of the positive electrode active material caused by nickel doping in the positive electrode active material, thereby improving high-temperature cycling performance of the electrochemical apparatus. When the mass percentage of the nickel is excessively low, for example, lower than 0.05%, energy density of the electrochemical apparatus cannot be increased. When the mass percentage of the nickel is excessively high, for example, higher than 20%, the structural stability of the positive electrode active material reduces and the transition metals are prone to dissolution, thereby affecting the high-temperature cycling performance of the

electrochemical apparatus. When the value of (C + D)/B is excessively small, for example, less than 0.1, the nickel content in the positive electrode active material is high, or the total content of the lithium bis(oxalato)borate and the 1,3,6-hexanetricarbonitrile is low, affecting the high-temperature cycling performance of the electrochemical apparatus. When the value of (C + D)/B is excessively large, for example, greater than 23, the nickel content in the positive electrode active material is low, leading to low energy density of the electrochemical apparatus, or the total content of the lithium bis(oxalato)borate and the 1,3,6-hexanetricarbonitrile is high, resulting in generation of many interface products at the interface between the positive electrode plate and the electrolyte, and hindering transport of $Li^+$ at the interface, thereby affecting the high-temperature cycling performance of the electrochemical apparatus. With the mass percentage of Ni controlled within the foregoing range, both the lithium bis(oxalato)borate and the 1,3,6-hexanetricarbonitrile introduced into the electrolyte, and the value of (C + D)/B controlled within the foregoing range, a synergistic effect is generated between the positive electrode plate and the electrolyte, so as to balance the energy density and high-temperature cycling performance of the electrochemical apparatus provided in this application, improving comprehensive performance of the electrochemical apparatus. In this application, "high temperature" refers to temperature greater than or equal to 35°C.

In some embodiments of this application, based on the mass of the positive electrode active material, a mass percentage of cobalt is A%, where $40 \leq A \leq 60$. For example, the mass percentage A% of cobalt may be 40, 42, 45, 48, 50, 52, 55, 58, 60, or a value within a range defined by any two of these values. With the mass percentage of cobalt controlled within the foregoing range, the positive electrode active material obtained has high gram capacity, which is conducive to increasing the energy density of the electrochemical apparatus. Therefore, a synergistic effect is generated between the foregoing positive electrode active material included in the electrochemical apparatus provided in this application and the electrolyte in the electrochemical apparatus, so as to balance the energy density and high-temperature cycling performance of the electrochemical apparatus provided in this application, improving the comprehensive performance of the electrochemical apparatus.

In some embodiments of this application, based on the mass of the positive electrode active material, a mass percentage of cobalt is A%, where $0.1 \leq A/20B \leq 30$. In some embodiments of this application, $0.1 \leq A/20B \leq 3$. For example, the value of A/20B may be 0.1, 0.5, 1, 3, 5, 10, 15, 20, 25, 30, or a value within a range defined by any two of these values. With the value of A/20B controlled within the foregoing range, the positive electrode active material obtained has high gram capacity, which is conducive to increasing the energy density of the electrochemical apparatus. Therefore, a synergistic effect is generated between the foregoing positive electrode active material included in the electrochemical apparatus provided in this application and the electrolyte in the electrochemical apparatus, so as to balance the energy density and high-temperature cycling performance of the electrochemical apparatus provided in this application, improving the comprehensive performance of the electrochemical apparatus.

In some embodiments of this application, based on the mass of the positive electrode active material, a mass percentage of cobalt is A%, where $40 \leq A \leq 60$ and $0.1 \leq A/20B \leq 30$. With the mass percentage of cobalt and the value of A/20B controlled within the foregoing ranges, the positive electrode active material obtained has high gram capacity, which is conducive to increasing the energy density of the electrochemical apparatus. Therefore, a synergistic effect is generated between the foregoing positive electrode active material included in the electrochemical apparatus provided in this application and the electrolyte in the electrochemical apparatus, so as to balance the energy density and high-temperature cycling performance of the electrochemical apparatus provided in this application, improving the comprehensive performance of the electrochemical apparatus.

In some embodiments of this application, $0.05 \leq C \leq 5$. In some embodiments of this application, $0.3 \leq C \leq 3$. For example, the mass percentage C% of the lithium bis(oxalato)borate may be 0.05%, 0.1%, 0.3%, 0.5%, 1%, 2%, 3%, 4%, 5%, or a value within a range defined by any two of these values. With the mass percentage of the lithium bis(oxalato)borate controlled within the foregoing range, the issues of affecting lithium ion transport and unstable structure of the positive electrode active material caused by nickel doping in the positive electrode active material can be alleviated, improving the high-temperature cycling performance of the electrochemical apparatus. Therefore, a synergistic effect is generated between the foregoing positive electrode active material included in the electrochemical apparatus provided in this application and the electrolyte in the electrochemical apparatus, so as to balance the energy density and high-temperature cycling performance of the electrochemical apparatus provided in this application, improving the comprehensive performance of the electrochemical apparatus.

In some embodiments of this application, $0.1 \leq D \leq 8$. In some embodiments of this application, $1 \leq D \leq 6$. For example, the mass percentage D% of the 1,3,6-hexanetricarbonitrile may be 0.1%, 0.5%, 1%, 2%, 3%, 4%, 5%, 6%, 7%, 8%, or a value within a range defined by any two of these values. With the mass percentage of the 1,3,6-hexanetricarbonitrile controlled within the foregoing range, the issues of affecting lithium ion transport and unstable structure of the positive electrode active material caused by nickel doping in the positive electrode active material can be alleviated, improving the high-temperature cycling performance of the electrochemical apparatus. Therefore, a synergistic effect is generated between the foregoing positive electrode active material included in the electrochemical apparatus provided in this application and the electrolyte in the electrochemical apparatus, so as to balance the energy density and high-temperature cycling performance of the electrochemical apparatus provided in this application, improving the comprehensive performance of the electrochemical apparatus.

In some embodiments of this application, $0.05 \leq C \leq 5$ and $0.1 \leq D \leq 8$. In some embodiments of this application, $0.3 \leq C \leq 3$ and $1 \leq D \leq 6$. For example, the mass percentage C% of the lithium bis(oxalato)borate may be 0.05%, 0.1%, 0.3%, 0.5%, 1%, 2%, 3%, 4%, 5%, or a value within a range defined by any two of these values, and the mass percentage D% of the 1,3,6-hexanetricarbonitrile may be 0.1%, 0.5%, 1%, 2%, 3%, 4%, 5%, 6%, 7%, 8%, or a value within a range defined by any two of these values. With the respective mass percentages of the lithium bis(oxalato)borate and the 1,3,6-hexanetricarbonitrile controlled within the foregoing ranges, the issues of affecting lithium ion transport and unstable structure of the positive electrode active material caused by nickel doping in the positive electrode active material can be alleviated, improving the high-temperature cycling performance of the electrochemical apparatus. Therefore, a synergistic effect is generated between the foregoing positive electrode active material included in the electrochemical apparatus provided in this application and the electrolyte in the electrochemical apparatus, so as to balance the energy density and high-temperature cycling performance of the electrochemical apparatus provided in this application, improving the comprehensive performance of the electrochemical apparatus.

In some embodiments of this application, the positive electrode active material includes $Li_{\alpha}Co_{1-x-y}Ni_xM_yO_{\beta}$, where $0.95 \leq \alpha \leq 1.4$, $0.0005 < x \leq 0.4$, $0 \leq y \leq 0.02$, and $1.90 \leq \beta \leq 2.10$, and M includes at least one of Mg, Al, Ca, Ti, Zr, V, Cr, Fe, Mn, Cu, Zn, Rb, or Sn. For example, the positive electrode active material may include but is not limited to at least one of $LiCo_{0.94}Ni_{0.05}Mn_{0.01}O_2$, $LiCo_{0.89}Ni_{0.1}Mn_{0.01}O_2$, $LiCo_{0.84}Ni_{0.15}Mn_{0.01}O_2$, $LiCo_{0.79}Ni_{0.2}Mn_{0.01}O_2$, $LiCo_{0.85}Ni_{0.15}O_2$, $LiCo_{0.83}Ni_{0.15}Mn_{0.02}O_2$, $LiCo_{0.83}Ni_{0.15}Al_{0.02}O_2$, or $LiCo_{0.83}Ni_{0.15}Mg_{0.02}O_2$. The foregoing positive electrode active material being selected balances the energy density and high-temperature cycling performance of the electrochemical apparatus provided in this application, improving the comprehensive performance of the electrochemical apparatus.

In some embodiments of this application, the electrolyte further includes a compound represented by formula (I):

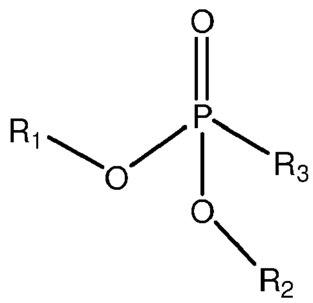

formula (I)

$R_1$, $R_2$, and $R_3$ are each independently selected from substituted or unsubstituted C1 to C10 alkyl group, substituted or unsubstituted C1 to C10 unsaturated alkyl group, substituted or unsubstituted C1 to C10 alkoxy group, substituted or unsubstituted C2 to C10 alkoxyalkyl group, substituted or unsubstituted C2 to C10 heterocycloalkyl group, substituted or unsubstituted C1 to C10 carbonyl group, and substituted or unsubstituted C2 to C10 ester group, where when the foregoing groups are substituted, a substituent group is fluorine atom or cyano group; and heteroatom in the heterocycloalkyl group is selected from oxygen atom. For example, C1 to C10 alkyl group is selected from methyl group, ethyl group, propyl group, butyl group, amyl group, or the like; C1 to C10 unsaturated alkyl group is selected from vinyl group, propenyl group, butenyl group, pentenyl group, ethynyl group, propynyl group, butynyl group, pentynyl group, or the like; C1 to C10 alkoxy group is selected from methoxy group ($CH_3O$-), ethoxy group ($C_2H_5O$-), propoxy group ($C_3H_7O$-), or the like; C2 to C10 alkoxyalkyl group is selected from

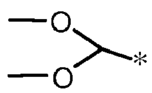

or the like; C2 to C10 heterocycloalkyl group is selected from

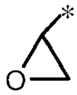, 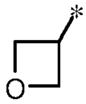, 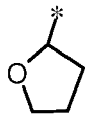, 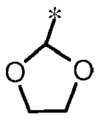, 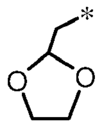,

or the like; C1 to C10 carbonyl group is selected from

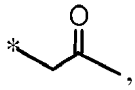, 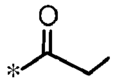,

or the like; and C2 to C10 ester group is selected from

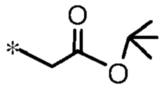, 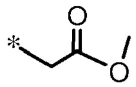, 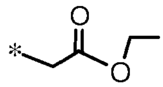,

or the like. "*" in the foregoing groups indicates an attachment site. In this application, the foregoing "alkoxyalkyl group" is named according to the systematic nomenclature, and specifically refers to a group obtained by substituting a hydrogen atom on an alkyl group with an alkoxy group.

For example, the compound represented by formula (I) includes at least one of the following compounds:

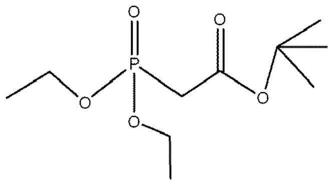

formula (I-1)

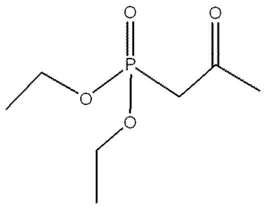

formula (I-2)

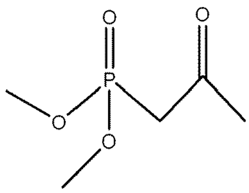

formula (I-3)

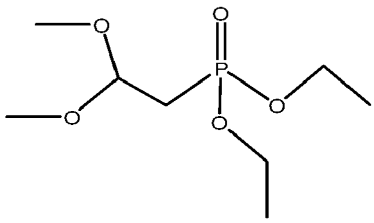

formula (I-4)

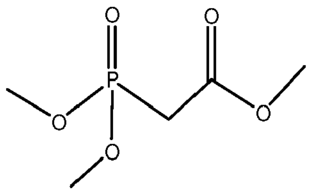

formula (I-5)

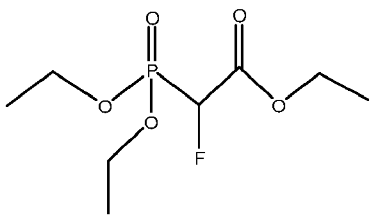

formula (I-6)

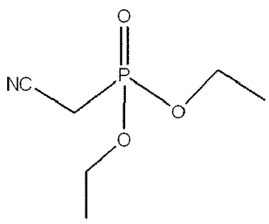

formula (I-7)

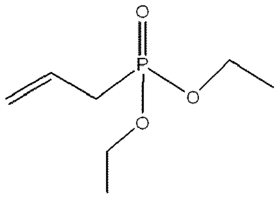 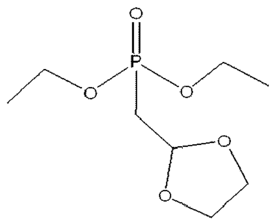

formula (I-8) formula (I-9)

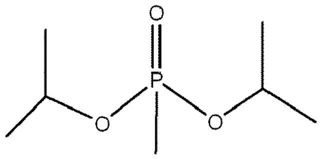

formula (I-10).

Based on the mass of the electrolyte, a mass percentage of the compound represented by formula (I) is E%, where $0.05 \leq E \leq 1$. In some embodiments of this application, $0.1 \leq E \leq 0.5$. For example, the mass percentage E% of the compound represented by formula (I) may be 0.05%, 0.1%, 0.2%, 0.3%, 0.4%, 0.5%, 0.6%, 0.7%, 0.8%, 0.9%, 1%, or a value within a range defined by any two of these values. The foregoing compound represented by formula (I) can oxidize on a surface of the positive electrode plate to form a CEI film containing phosphate, which facilitates transport of lithium ions and reduces interface impedance between the positive electrode plate and the electrolyte. Therefore, with the foregoing compound represented by formula (I) added to the electrolyte that includes the lithium bis(oxalato)borate and the 1,3,6-hexanetricarbonitrile and the mass percentage thereof controlled within the foregoing range, the issues of affecting lithium ion transport and unstable structure of the positive electrode active material caused by nickel doping in the positive electrode active material can be alleviated, which improves the high-temperature cycling performance and kinetic performance of the electrochemical apparatus, so as to balance the energy density, high-temperature cycling performance, and kinetic performance of the electrochemical apparatus provided in this application, improving the comprehensive performance of the electrochemical apparatus.

In some embodiments of this application, the electrolyte further includes a dinitrile compound, where the dinitrile compound includes at least one of malononitrile, succinonitrile, glutaronitrile, adiponitrile, suberonitrile, terephthalonitrile, tetradecanedinitrile, azomalononitrile, methyleneglutaronitrile, or pentenedinitrile; and based on the mass of the electrolyte, a mass percentage of the dinitrile compound is F%, where $0.1 \leq F \leq 8$. For example, the mass percentage F% of the dinitrile compound may be 0.1%, 0.5%, 1%, 2%, 3%, 4%, 5%, 6%, 7%, 8%, or a value within a range defined by any two of these values. The dinitrile compound can improve interface stability of the CEI film, improving the high-temperature cycling performance of the electrochemical apparatus. Therefore, with the foregoing dinitrile compound added to the electrolyte that includes the lithium bis(oxalato)borate and the 1,3,6-hexanetricarbonitrile and the mass percentage thereof controlled within the foregoing range, the issues of affecting lithium ion transport and unstable structure of the positive electrode active material caused by nickel doping in the positive electrode active material can be alleviated, which further improves the high-temperature cycling performance of the electrochemical apparatus, so as to balance the energy density and high-temperature cycling performance of the electrochemical apparatus provided in this application, improving the comprehensive performance of the electrochemical apparatus.

In some embodiments of this application, the electrolyte further includes a polynitrile compound, where the polynitrile compound includes at least one of the following compounds:

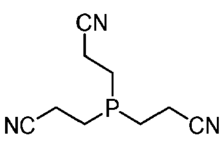 (II-1) 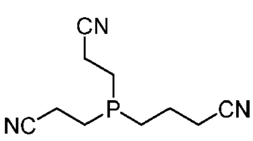 (II-2)

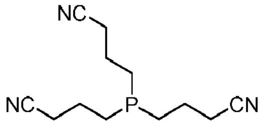 (II-3)

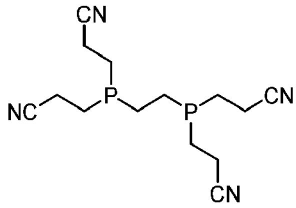 (II-4)

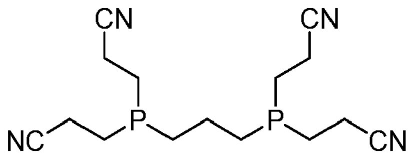 (II-5)

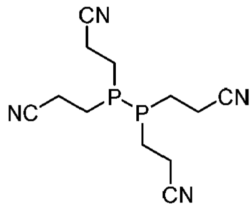 (II-6)

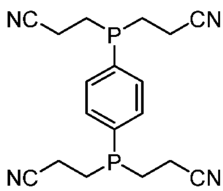 (II-7)

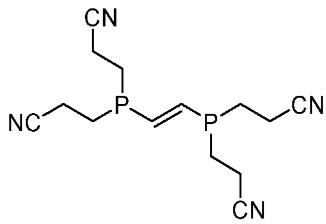 (II-8)

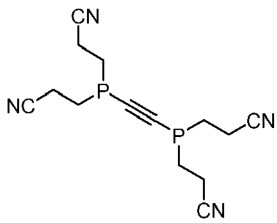 (II-9)

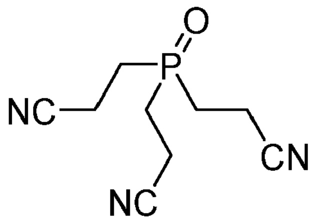 (II-10)

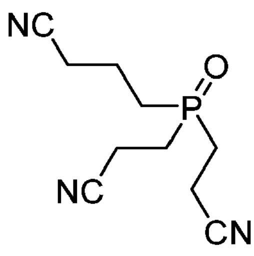 (II-11)

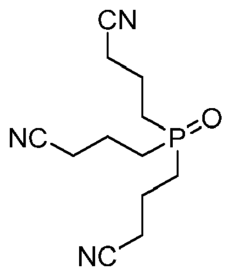 (II-12)

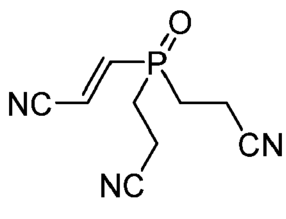 (II-13)

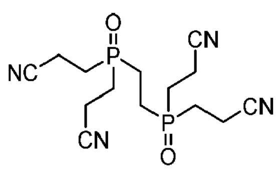 (II-14)

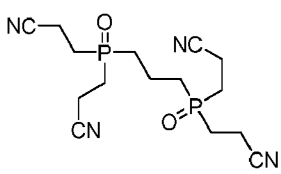 (II-15) 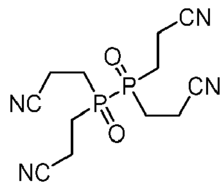 (II-16)

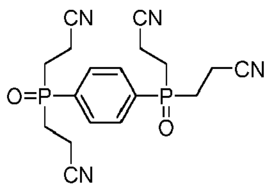 (II-17) 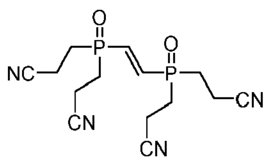 (II-18)

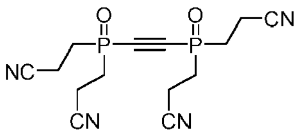 (II-19) 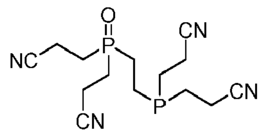 (II-20)

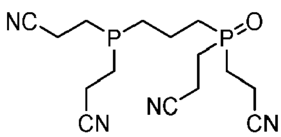 (II-21) 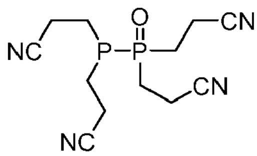 (II-22)

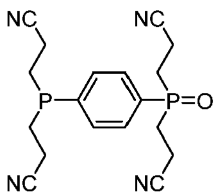 (II-23) 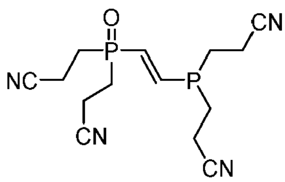 (II-24)

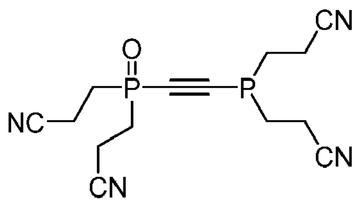 (II-25).

Based on the mass of the electrolyte, a mass percentage of the polynitrile compound is G%, where 0.1 ≤ G ≤ 8. For example, the mass percentage G% of the polynitrile compound may be 0.1%, 0.5%, 1%, 2%, 3%, 4%, 5%, 6%, 7%, 8%, or a value within a range defined by any two of these values. The polynitrile compound can improve the interface stability of the CEI film, improving the high-temperature cycling performance of the electrochemical apparatus. Therefore, with the foregoing polynitrile compound added to the electrolyte that includes the lithium bis(oxalato)borate and the 1,3,6-hexanetricarbonitrile and the mass percentage thereof controlled within the foregoing range, the issues of affecting lithium ion transport and unstable structure of the positive electrode active material caused by nickel doping in the positive electrode active material can be alleviated, which further improves the high-temperature cycling performance of the electrochemical apparatus, so as to balance the energy density and high-temperature cycling performance of the electrochemical apparatus provided in this application, improving the comprehensive performance of the electrochemical apparatus.

In some embodiments of this application, the electrolyte further includes the foregoing dinitrile compound and the foregoing polynitrile compound, which can improve the interface stability of the CEI film, improving the high-temperature cycling performance of the electrochemical apparatus. Therefore, with the foregoing dinitrile compound and the foregoing polynitrile compound added to the electrolyte that includes the lithium bis(oxalato)borate and the 1,3,6-hexanetricarbonitrile and the mass percentages thereof controlled within the foregoing ranges, the issues of affecting lithium ion transport and unstable structure of the positive electrode active material caused by nickel doping in the positive electrode active material can be alleviated, which further improves the high-temperature cycling performance of the electrochemical apparatus, so as to balance the energy density and high-temperature cycling performance of the electrochemical apparatus provided in this application, improving the comprehensive performance of the electrochemical apparatus.

In some embodiments of this application, the electrolyte further includes the foregoing dinitrile compound and the foregoing polynitrile compound, and a sum of the mass percentages of the dinitrile compound and polynitrile compound satisfies $0.1 \leq F + G \leq 8$. For example, the value of F + G may be 0.1, 0.5, 1, 2, 3, 4, 5, 6, 7, 8, or a value within a range defined by any two of these values. With the value of F + G and the mass percentages of the foregoing dinitrile compound and polynitrile compound controlled within the foregoing ranges, the foregoing dinitrile compound and the foregoing polynitrile compound can synergistically improve the interface stability of the CEI film, improving the high-temperature cycling performance of the electrochemical apparatus. Therefore, with the foregoing dinitrile compound and the foregoing polynitrile compound added to the electrolyte that includes the lithium bis(oxalato)borate and the 1,3,6-hexanetricarbonitrile and the mass percentages thereof controlled within the foregoing ranges, the issues of affecting lithium ion transport and unstable structure of the positive electrode active material caused by nickel doping in the positive electrode active material can be alleviated, which further improves the high-temperature cycling performance of the electrochemical apparatus, so as to balance the energy density and high-temperature cycling performance of the electrochemical apparatus provided in this application, improving the comprehensive performance of the electrochemical apparatus.

In some embodiments of this application, the electrolyte includes the lithium bis(oxalato)borate, the 1,3,6-hexanetricarbonitrile, a lithium salt, and an organic solvent. The lithium salt includes at least one of lithium hexafluorophosphate, lithium bistrifluoromethanesulfonimide, lithium bis(fluorosulfonyl)imide, lithium tetrafluoroborate, lithium bis(oxalato)borate, lithium difluoro(oxalato)borate, or lithium difluorophosphate. Based on the mass of the electrolyte, a mass percentage of the lithium salt is H%, where $8 \leq H \leq 20$. For example, the mass percentage H% of the lithium salt may be 8%, 9%, 10%, 11%, 12%, 12.5%, 15%, 17%, 18%, 20%, or a value within a range defined by any two of these values. The organic solvent includes a carbonate compound and a carboxylate compound, where the carbonate compound includes at least one of ethylene carbonate, propylene carbonate, butylene carbonate, dimethyl carbonate, ethyl methyl carbonate, diethyl carbonate, dipropyl carbonate, methyl propyl carbonate, ethyl propyl carbonate, dioctyl carbonate, dipentyl carbonate, ethyl isobutyl carbonate, isopropyl methyl carbonate, di-n-butyl carbonate, diisopropyl carbonate, or propyl carbonate, and the carboxylate compound includes at least one of methyl acetate, ethyl acetate, propyl acetate, ethyl propionate, propyl propionate, butyl propionate, or amyl propionate. Based on the mass of the electrolyte, a mass percentage of the organic solvent is 67% to 90%, a mass percentage of the carbonate compound is J%, and a mass percentage of the carboxylate compound is K%, where $14 \leq J \leq 90$ and $0 \leq K \leq 60$. For example, the mass percentage of the organic solvent may be 67%, 70%, 75%, 80%, 85%, 90%, or a value within a range defined by any two of these values; the mass percentage J% of the carbonate compound may be 14%, 20%, 30%, 40%, 50%, 60%, 70%, 75%, 80%, 85%, 90%, or a value within a range defined by any two of these values; and the mass percentage K% of the carboxylate compound may be 0%, 10%, 20%, 30%, 40%, 50%, 60%, or a value within a range defined by any two of these values. The mass percentages of the lithium bis(oxalato)borate and the 1,3,6-hexanetricarbonitrile are within the foregoing respective ranges. With the electrolyte including the lithium bis(oxalato)borate, the 1,3,6-hexanetricarbonitrile, the lithium salt, and the organic solvent and the respective mass percentages thereof controlled within the foregoing ranges, it is conducive to increasing the transport rate of lithium ions and reducing side reactions at the interfaces of the positive electrode plate and the negative electrode plate, improving the high-temperature cycling performance and kinetic performance of the electrochemical apparatus. Therefore, a synergistic effect is generated between the foregoing electrolyte included in the electrochemical apparatus provided in this application and the positive electrode active material in the electrochemical apparatus, so as to balance the energy density and high-temperature cycling performance of the electrochemical apparatus provided in this application, improving the comprehensive performance of the electrochemical apparatus.

In some embodiments of this application, the electrolyte includes the lithium bis(oxalato)borate, the 1,3,6-hexanetricarbonitrile, the lithium salt, the organic solvent, and at least one of the compound represented by formula (I), the dinitrile compound, or the polynitrile compound. The lithium salt includes at least one of lithium hexafluorophosphate, lithium bistrifluoromethanesulfonimide, lithium bis(fluorosulfonyl)imide, lithium tetrafluoroborate, lithium bis(oxalato)borate, lithium difluoro(oxalato)borate, or lithium difluorophosphate. Based on the mass of the electrolyte, a mass percentage of the lithium salt is H%, where $8 \leq H \leq 20$. For example, the mass percentage H% of the lithium salt may be 8%, 9%, 10%, 11%, 12%, 12.5%, 15%, 17%, 18%, 20%, or a value within a range defined by any two of these values. The organic solvent includes a carbonate compound and a carboxylate compound, where the carbonate compound includes at least one of ethylene carbonate, propylene carbonate, butylene carbonate, dimethyl carbonate, ethyl methyl carbonate, diethyl

carbonate, dipropyl carbonate, methyl propyl carbonate, ethyl propyl carbonate, dioctyl carbonate, dipentyl carbonate, ethyl isobutyl carbonate, isopropyl methyl carbonate, di-n-butyl carbonate, diisopropyl carbonate, or propyl carbonate, and the carboxylate compound includes at least one of methyl acetate, ethyl acetate, propyl acetate, ethyl propionate, propyl propionate, butyl propionate, or amyl propionate. Based on the mass of the electrolyte, a mass percentage of the organic solvent is 67% to 90%, a mass percentage of the carbonate compound is J%, and a mass percentage of the carboxylate compound is K%, where $14 \leq J \leq 90$ and $0 \leq K \leq 60$. For example, the mass percentage J% of the organic solvent may be 67%, 70%, 75%, 80%, 85%, 90%, or a value within a range defined by any two of these values; the mass percentage J% of the carbonate compound may be 14%, 20%, 30%, 40%, 50%, 60%, 70%, 75%, 80%, 85%, 90%, or a value within a range defined by any two of these values; and the mass percentage K% of the carboxylate compound may be 0%, 10%, 20%, 30%, 40%, 50%, 60%, or a value within a range defined by any two of these values. The mass percentages of the lithium bis(oxalato)borate and the 1,3,6-hexanetricarbonitrile are within the foregoing respective ranges, and when the electrolyte includes at least one of the compound represented by formula (I), the dinitrile compound, or the polynitrile compound, the mass percentages thereof are within the foregoing respective ranges. With the electrolyte including the lithium bis(oxalato)borate, the 1,3,6-hexanetricarbonitrile, the lithium salt, the organic solvent, and at least one of the compound represented by formula (I), the dinitrile compound, or the polynitrile compound and the respective mass percentages thereof controlled within the foregoing ranges, it is conducive to further increasing the transport rate of lithium ions and reducing side reactions at the interfaces of the positive electrode plate and the negative electrode plate, improving the high-temperature cycling performance and kinetic performance of the electrochemical apparatus. Therefore, a synergistic effect is generated between the foregoing electrolyte included in the electrochemical apparatus provided in this application and the positive electrode active material in the electrochemical apparatus, so as to balance the energy density, high-temperature cycling performance, and kinetic performance of the electrochemical apparatus provided in this application, improving the comprehensive performance of the electrochemical apparatus.

A preparation method of positive electrode active material is not particularly limited in this application, provided that the objectives of this application can be achieved. For example, the preparation method of positive electrode active material may include but is not limited to the following steps: $LiCoO_2$ (CAS number: 12190-79-3) and a nickel-containing compound are mixed to uniformity and then subjected to heat treatment in an air atmosphere to produce a positive electrode active material. The nickel-containing compound may include but is not limited to at least one of $NiCO_3$, NiO, or $Ni(OH)_2$. Temperature, time, and temperature rise velocity of the foregoing heat treatment are not particularly limited in this application, provided that the objectives of this application can be achieved. For example, the heat treatment is performed at a temperature of 650°C to 850°C, a time of 22 h to 26 h, and a temperature rise velocity of 2°C/min to 8°C/min. A mass ratio of $LiCoO_2$ to the nickel-containing compound is not particularly limited in this application, provided that the objectives of this application can be achieved.

Typically, the mass ratio of $LiCoO_2$ to the nickel-containing compound can be changed to control the mass percentages of Co and Ni in the positive electrode active material. For example, increasing the mass ratio of $LiCoO_2$ to the nickel-containing compound leads to an increase in the mass percentage of Co and a decrease in the mass percentage of Ni; and decreasing the mass ratio of $LiCoO_2$ to the nickel-containing compound leads to a decrease in the mass percentage of Co and an increase in the mass percentage of Ni.

When the positive electrode active material contains the foregoing element M, both the nickel-containing compound and a compound containing the element M can be added during preparation of the positive electrode active material. For example, when the element M is Mg, Al, Ca, Ti, Zr, V, Cr, Fe, Mn, Cu, Zn, Rb, or Sn, the compound containing the element M added accordingly may be an oxide, hydroxide, or carbonate compound that contains the element M. The oxide, hydroxide, and carbonate compound that contain the element M are not limited in this application, provided that the objectives of this application can be achieved. The content of the element M in the positive electrode active material can be controlled by controlling the added amount of the compound containing the element M.

In this application, the "positive electrode material layer disposed on at least one surface of the positive electrode current collector" means that the positive electrode material layer may be disposed on one surface of the positive electrode current collector in its thickness direction, or on two surfaces of the positive electrode current collector in its thickness direction. It should be noted that the "surface" herein may be an entire region or a partial region of the surface of the positive electrode current collector. This is not particularly limited in this application, provided that the objectives of this application can be achieved. The positive electrode current collector is not particularly limited in this application, provided that the objectives of this application can be achieved. For example, the positive electrode current collector may include aluminum foil, aluminum alloy foil, a composite current collector (for example, an aluminum-carbon composite current collector), or the like.

The positive electrode material layer may further include a conductive agent and a binder. Types of the conductive agent and the binder are not particularly limited in this application, provided that the objectives of this application can be achieved. For example, the conductive agent may include but is not limited to at least one of conductive carbon black (Super P), carbon nanotubes (CNTs), carbon fiber, flake graphite, Ketjen black, graphene, a metal material, or a conductive polymer. The carbon nanotubes may include but are not limited to single-walled carbon nanotubes and/or

multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. For example, the binder may include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyamideimide, styrene-butadiene rubber, or polyvinylidene fluoride. A mass ratio of the positive electrode active material, the conductive agent, and the binder in the positive electrode material layer is not particularly limited in this application, and persons skilled in the art can make selection based on actual needs, provided that the objectives of this application can be achieved.

Thicknesses of the positive electrode current collector and the positive electrode material layer are not particularly limited in this application, provided that the objectives of this application can be achieved. For example, the thickness of the positive electrode current collector is 6 μm to 15 μm, and the thickness of the positive electrode material layer is 30 μm to 120 μm. Thickness of the positive electrode plate is not particularly limited in this application, provided that the objectives of this application can be achieved. For example, the thickness of the positive electrode plate is 50 μm to 250 μm.

In this application, the electrochemical apparatus further includes a negative electrode plate, and the negative electrode plate includes a negative electrode current collector and a negative electrode material layer disposed on at least one surface of the negative electrode current collector. The "negative electrode material layer disposed on at least one surface of the negative electrode current collector" means that the negative electrode material layer may be disposed on one surface of the negative electrode current collector in its thickness direction, or on two surfaces of the negative electrode current collector in its thickness direction. It should be noted that the "surface" herein may be an entire region or a partial region of the surface of the negative electrode current collector. This is not particularly limited in this application, provided that the objectives of this application can be achieved.

The negative electrode current collector is not particularly limited in this application, provided that the objectives of this application can be achieved. For example, the negative electrode current collector may include copper foil, copper alloy foil, nickel foil, stainless steel foil, titanium foil, nickel foam, copper foam, a composite current collector (for example, a lithium-copper composite current collector, a carbon-copper composite current collector, a nickel-copper composite current collector, or a titanium-copper composite current collector), or the like. The negative electrode current collector may be a metal plate without through holes or a porous metal plate with through holes.

The negative electrode material layer includes a negative electrode active material, and the negative electrode active material is not particularly limited in this application, provided that the objectives of this application can be achieved. For example, the negative electrode active material may include but is not limited to at least one of natural graphite, artificial graphite, mesocarbon microbeads, hard carbon, soft carbon, silicon, a silicon-carbon composite, Li-Sn alloy, Li-Sn-O alloy, Sn, SnO, $SnO_2$, spinel-structured lithiated $TiO_2$-$Li_4Ti_5O_{12}$, or Li-Al alloy.

The negative electrode material layer may further include a conductive agent, a binder, and a thickener, and types of the conductive agent, the binder, and the thickener are not particularly limited in this application, provided that the objectives of this application can be achieved. For example, the conductive agent and the binder may be at least one of the foregoing conductive agents and binders, and the thickener may include but is not limited to at least one of sodium carboxymethyl cellulose or lithium carboxymethyl cellulose. A mass ratio of the negative electrode active material, the conductive agent, the binder, and the thickener in the negative electrode material layer is not particularly limited in this application, and persons skilled in the art can make selection based on actual needs, provided that the objectives of this application can be achieved.

Thickness of the negative electrode material layer is not particularly limited in this application, provided that the objectives of this application can be achieved. For example, the thickness of the negative electrode material layer is 30 μm to 120 μm. Thickness of the negative electrode current collector is not particularly limited in this application, provided that the objectives of this application can be achieved. For example, the thickness of the negative electrode current collector is 6 μm to 12 μm. Thickness of the negative electrode plate is not particularly limited in this application, provided that the objectives of this application can be achieved. For example, the thickness of the negative electrode plate is 50 μm to 250 μm.

In this application, the electrochemical apparatus further includes a separator. The separator is used to separate the positive electrode plate from the negative electrode plate to prevent short circuit inside the electrochemical apparatus and to allow electrolyte ions to pass through freely without affecting the electrochemical charging and discharging processes. The separator is not particularly limited in this application, provided that the objectives of this application can be achieved. For example, material of the separator may include but is not limited to at least one of polyethylene (PE) and polypropylene (PP)-based polyolefin (PO), polyester (for example, polyethylene terephthalate (PET) film), cellulose, polyimide (PI), polyamide (PA), spandex, or aramid. For example, polyethylene includes at least one of high-density polyethylene, low-density polyethylene, or ultra-high-molecular-weight polyethylene. Type of the separator may include

but is not limited to at least one of woven film, non-woven film, microporous film, composite film, laminated film, or spinning film.

In some embodiments of this application, the separator may include a substrate layer and a surface treatment layer. The substrate layer may be a non-woven fabric, film, or composite film having a porous structure, and material of the substrate layer may include at least one of polyethylene, polypropylene, polyethylene glycol terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is provided on at least one surface of the substrate layer, and the surface treatment layer may be a polymer layer, an inorganic substance layer, or a layer formed by mixing a polymer and an inorganic substance. For example, the inorganic substance layer includes inorganic particles and a binder. The inorganic particle is not particularly limited, and for example, may include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and may be, for example, at least one of the foregoing binders. The polymer layer includes a polymer, and material of the polymer includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

A preparation process of the electrochemical apparatus of this application is well known to persons skilled in the art, and is not particularly limited in this application. For example, the preparation process may include but is not limited to the following steps: a positive electrode plate, a separator, and a negative electrode plate are stacked in sequence and go through operations such as winding and folding as needed to obtain an electrode assembly with a winding structure, the electrode assembly is put into a packaging bag, an electrolyte is injected into the packaging bag, and the packaging bag is sealed to obtain an electrochemical apparatus. Alternatively, a positive electrode plate, a separator, and a negative electrode plate are stacked in sequence, four corners of the entire laminated structure are fixed with tapes to obtain an electrode assembly with a laminated structure, the electrode assembly is put into a packaging bag, an electrolyte is injected into the packaging bag, and the packaging bag is sealed to obtain an electrochemical apparatus. In addition, an overcurrent prevention element, a guide plate, and the like may also be placed into the packaging bag as needed, so as to prevent pressure increase, overcharge, and overdischarge inside the electrochemical apparatus. The packaging bag is a packaging bag known in the art, and is not limited in this application.

A second aspect of this application provides an electronic apparatus, including the electrochemical apparatus according to any one of the foregoing embodiments. Therefore, the electronic apparatus provided in this application has good use performance.

Type of the electronic apparatus is not particularly limited in this application and the electronic apparatus may be any known electronic apparatus used in the prior art. In some embodiments of this application, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

This application has the following beneficial effects:

This application provides an electrochemical apparatus and an electronic apparatus. The electrochemical apparatus includes a positive electrode plate and an electrolyte. The positive electrode plate includes a positive electrode current collector and a positive electrode material layer disposed on at least one surface of the positive electrode current collector, the positive electrode material layer includes a positive electrode active material, and the positive electrode active material contains cobalt and nickel, where based on a mass of the positive electrode active material, a mass percentage of the nickel is B%, where $0.05 \leq B \leq 20$. The electrolyte includes lithium bis(oxalato)borate and 1,3,6-hexanetricarbonitrile, where based on a mass of the electrolyte, a mass percentage of the lithium bis(oxalato)borate is C% and a mass percentage of the 1,3,6-hexanetricarbonitrile is D%. The electrochemical apparatus satisfies $0.1 \leq (C + D)/B \leq 23$. According to the electrochemical apparatus provided in this application, with the mass percentage of Ni controlled within the foregoing range, both the lithium bis(oxalato)borate and the 1,3,6-hexanetricarbonitrile introduced into the electrolyte, and the value of (C + D)/B controlled within the foregoing range, a synergistic effect is generated between the positive electrode plate and the electrolyte, so as to balance the energy density and high-temperature cycling performance of the electrochemical apparatus provided in this application, improving the comprehensive performance of the electrochemical apparatus.

Certainly, when any one of the products or methods of this application is implemented, the advantages described above are not necessarily demonstrated all at the same time.

## DESCRIPTION OF EMBODIMENTS

The following clearly and completely describes the technical solutions in some embodiments of this application. Apparently, the described embodiments are only some but not all of the embodiments of this application. All other embodiments obtained by persons of ordinary skill in the art based on some embodiments of this application shall fall within the protection scope of this application.

### Test method and device

### Content test of metal elements Co and Ni in positive electrode active material

A lithium-ion battery was discharged to 3 V at 0.2C, and then disassembled to take a positive electrode plate. A positive electrode material layer of the positive electrode plate washed with DMC (dimethyl carbonate) was scraped off with a scraper to obtain powder of the positive electrode material layer, and 0.4 g of powder of the positive electrode material layer was dissolved by a 12 mL mixed solvent, where the mixed solvent was obtained by mixing aqua regia and HF at a volume ratio of 5:1. Then, the solution was diluted to 100 mL, and contents of metal elements such as Co and Ni in the solution were tested by using an inductively coupled plasma emission spectrometer (ICP) in %. Aqua regia was obtained by mixing concentrated nitric acid and concentrated hydrochloric acid at a volume ratio of 1:1. The contents of Co and Ni in the positive electrode active material were calculated based on a mass percentage of the positive electrode active material in the positive electrode material layer.

### Discharge gram capacity test of lithium-ion battery

Preparation of lithium-ion button battery: In a glove box, a negative electrode housing, a spacer, a lithium metal plate, a separator, a positive electrode plate, an elastic sheet, and a positive electrode housing were assembled in sequence and sealed on a sealing machine to obtain a battery. An electrolyte was added dropwise onto the spacer, the lithium metal plate, the separator, and the positive electrode plate to infiltrate them. The positive electrode plate, the separator, and the electrolyte were the positive electrode plate, the separator, and the electrolyte in each example or comparative example, where a diameter of the positive electrode plate was 14 mm, a diameter of the lithium metal plate was 16 mm, and a diameter of the separator was 16.5 mm.

At 25°C, the prepared lithium-ion button battery was charged to a voltage of 4.5 V at 0.2C, further charged to a current lower than 0.05C at a constant voltage of 4.5 V, so that the battery was in a fully charged state of 4.5 V, and then discharged at a constant current of 0.2C until the voltage was 3.0 V, and then a discharge capacity of the lithium-ion battery was tested. Discharge gram capacity of lithium-ion battery = discharge capacity/mass of positive electrode active material. The mass of the positive electrode active material can be calculated based on the size of the positive electrode plate and the preparation formulation of the positive electrode plate in each example or comparative example.

### High-temperature cycling performance test of lithium-ion battery

At 45°C, the lithium-ion battery was charged to 4.5 V at a constant current of 0.7C, then charged to a current of 0.05C at a constant voltage of 4.5 V, and discharged to 3.0 V at a constant current of 1C. This was one charge and discharge cycle. This was the first cycle, and a discharge capacity of the lithium-ion battery after the first cycle was recorded. The lithium-ion battery was subjected to 500 charge and discharge cycles in the foregoing method, and a discharge capacity after 500 cycles was recorded. Discharge capacity retention rate = discharge capacity after 500 cycles/discharge capacity after the first cycle × 100%. The high-temperature cycling performance of the lithium-ion battery was evaluated based on the discharge capacity retention rate. A higher discharge capacity retention rate means better high-temperature cycling performance, and a lower discharge capacity retention rate means poorer high-temperature cycling performance.

### Impedance performance test of lithium-ion battery

The lithium-ion battery was charged to 4.5 V at a constant current of 0.7C, then charged to a current of 0.05C at a constant voltage, left standing for 10 min, and discharged at a constant current of 0.1C for 8 h, and a voltage V1 was recorded. The battery was left standing for 15 min, and the voltage was tested again and denoted as V2. Impedance Rss = (V2 - V1)/0.1C. The impedance was used as an indicator for evaluating the kinetic performance of the lithium-ion battery. Higher impedance means poorer kinetic performance, and lower impedance means better kinetic performance.

**Example 1-1**

<Preparation of positive electrode active material>

$LiCoO_2$ and nickel carbonate ($NiCO_3$) were mixed at a mass ratio X of 0.2 in a high-speed mixer at 300 r/min for 20 min. The mixture was put into an air kiln, heated to 820°C at 5°C/min and held for 24 h, taken out after natural cooling, and sieved with a 300-mesh sieve to obtain a positive electrode active material.

<Preparation of positive electrode plate>

The prepared positive electrode active material, conductive agent carbon nanotubes (CNT), and binder polyvinylidene fluoride were mixed at a mass ratio of 95:2:3, N-methylpyrrolidone (NMP) was added as a solvent, and the mixture was stirred by a vacuum stirrer to a uniform system, to obtain a positive electrode slurry with a solid content of 75wt%. The positive electrode slurry was uniformly applied onto one surface of a 12 μm thick positive electrode current collector aluminum foil and dried at 85°C, followed by cold pressing, to obtain a positive electrode plate with a 100 μm thick positive electrode material layer. Then, the same steps were repeated on the other surface of the aluminum foil to obtain a positive electrode plate coated with positive electrode material layers on two surfaces. The positive electrode plate was cut into a size of 74 mm × 867 mm and then welded with tabs for use.

<Preparation of negative electrode plate>

Negative electrode active material artificial graphite, styrene-butadiene rubber (SBR), and carboxymethyl cellulose (CMC) were mixed at a mass ratio of 95:2:3, then deionized water was added as a solvent to obtain a slurry with a solid content of 70wt%, and the slurry was stirred to uniformity. The slurry was uniformly applied onto one surface of an 8 μm thick copper foil and dried at 110°C, followed by cold pressing, to obtain a negative electrode plate with one surface coated with a 150 μm thick negative electrode material layer. Then, the same steps were repeated on the other surface of the copper foil to obtain a negative electrode plate coated with negative electrode material layers on two surfaces. The negative electrode plate was cut into a size of 75 mm × 867 mm and then welded with tabs for use.

<Preparation of electrolyte>

In an argon atmosphere glove box with a moisture content less than 10 ppm, carbonate compound ethylene carbonate (EC), propylene carbonate (PC), and diethyl carbonate (DEC) were evenly mixed at a mass ratio of 20:20:60, lithium bis(oxalato)borate, 1,3,6-hexanetricarbonitrile, and lithium salt $LiPF_6$ were added and stirred to obtain a uniform electrolyte. A mass percentage C% of the lithium bis(oxalato)borate was 0.3%, a mass percentage D% of the 1,3,6-hexanetricarbonitrile was 2%, a mass percentage H% of the lithium salt was 12.5%, and a mass percentage J% of the carbonate compound was 85.2%.

<Separator>

A 15 μm thick polyethylene porous polymer film (manufacturer: Celgard, LLC of USA) was used as a separator.

<Preparation of lithium-ion battery>

The positive electrode plate, the separator, and the negative electrode plate were sequentially stacked so that the separator was located between the positive electrode plate and the negative electrode plate to provide separation. Then, the resulting stack was wound to obtain an electrode assembly. The electrode assembly was placed into an aluminum-plastic film packaging bag and dehydrated at 80°C, and the prepared electrolyte was injected, followed by processes such as vacuum sealing, standing, formation, and shaping, to obtain a lithium-ion battery. An upper limit voltage for formation was 4.15 V, a formation temperature was 70°C, and a standing time in formation was 2 h.

**Examples 1-2 to 1-17**

These examples were the same as Example 1-1 except that the related preparation parameters were adjusted according to Table 1, where when the mass percentage of the lithium bis(oxalato)borate and/or the 1,3,6-hexanetricarbonitrile changed, the mass percentage of the organic solvent changed accordingly while the mass percentage of the lithium salt remained unchanged.

**Examples 2-1 to 2-7**

These examples were the same as Example 1-15 except that in <Preparation of electrolyte>, the compound represented by formula (I) was added according to Table 2 and the mass percentage thereof was adjusted according to Table 2, where the mass percentage of the organic solvent changed accordingly while the mass percentage of the lithium salt remained unchanged.

**Examples 3-1 to 3-14**

These examples were the same as Example 1-3 except that in <Preparation of electrolyte>, the dinitrile compound and/or the polynitrile compound was added according to Table 3 and the mass percentage thereof was adjusted according to Table 3, where the mass percentage of the organic solvent changed accordingly while the mass percentage of the lithium salt remained unchanged.

**Example 4-1**

This example was the same as Example 1-5 except that the positive electrode active material was prepared according to the following steps.

<Preparation of positive electrode active material>

$LiCoO_2$, nickel carbonate ($NiCO_3$), and $MnCO_3$ were mixed at a molar ratio of 0.83:0.15:0.02 in a high-speed mixer at 300 r/min for 20 min. The mixture was put into an air kiln, heated to 820°C at 5°C/min and held for 24 h, taken out after natural cooling, and sieved with a 300-mesh sieve to obtain a positive electrode active material.

**Example 4-2**

This example was the same as Example 1-5 except that the positive electrode active material was prepared according to the following steps.

<Preparation of positive electrode active material>

$LiCoO_2$, nickel carbonate ($NiCO_3$), and $Al_2(CO_3)_3$ were mixed at a molar ratio of 0.83:0.15:0.02 in a high-speed mixer at 300 r/min for 20 min. The mixture was put into an air kiln, heated to 820°C at 5°C/min and held for 24 h, taken out after natural cooling, and sieved with a 300-mesh sieve to obtain a positive electrode active material.

**Example 4-3**

This example was the same as Example 1-5 except that the positive electrode active material was prepared according to the following steps.

<Preparation of positive electrode active material>

$LiCoO_2$, nickel carbonate ($NiCO_3$), and $MgCO_3$ were mixed at a molar ratio of 0.83:0.15:0.02 in a high-speed mixer at 300 r/min for 20 min. The mixture was put into an air kiln, heated to 820°C at 5°C/min and held for 24 h, taken out after natural cooling, and sieved with a 300-mesh sieve to obtain a positive electrode active material.

**Comparative Examples 1 to 5**

These comparative examples were the same as Example 1-1 except that the related preparation parameters were adjusted according to Table 1, where when the mass percentage of the lithium bis(oxalato)borate and/or the 1,3,6-hexanetricarbonitrile changed, the mass percentage of the organic solvent changed accordingly while the mass percentage of the lithium salt remained unchanged.

Preparation parameters and performance tests of the examples and comparative examples are shown in Tables 1 to 4.

Table 1

| | Mass ratio X | A | B | A/20B | C | D | (C + D)/B | Discharge gram capacity (mAh/g) | Discharge capacity retention rate (%) |
|---|---|---|---|---|---|---|---|---|---|
| Example 1-1 | 0.2 | 59.9 | 0.1 | 29.95 | 0.3 | 2 | 23.00 | 180.1 | 60.2 |
| Example 1-2 | 1 | 59.5 | 0.5 | 5.95 | 0.3 | 2 | 4.60 | 180.1 | 62.1 |
| Example 1-3 | 2 | 59 | 1 | 2.95 | 0.3 | 2 | 2.30 | 180.5 | 65.8 |
| Example 1-4 | 8 | 56 | 4 | 0.70 | 0.3 | 2 | 0.58 | 181.5 | 65.5 |
| Example 1-5 | 15 | 50.1 | 8.8 | 0.33 | 0.3 | 2 | 0.29 | 182.8 | 64.2 |
| Example 1-6 | 18 | 50 | 10 | 0.25 | 0.3 | 2 | 0.23 | 183.2 | 63.9 |
| Example 1-7 | 34 | 40 | 20 | 0.10 | 0.3 | 2 | 0.12 | 183.8 | 62.5 |
| Example 1-8 | 15 | 52 | 8 | 0.33 | 0.05 | 2 | 0.26 | 182.8 | 59.3 |
| Example 1-9 | 15 | 52 | 8 | 0.33 | 0.5 | 2 | 0.31 | 182.8 | 65.1 |
| Example 1-10 | 15 | 52 | 8 | 0.33 | 1 | 2 | 0.38 | 182.8 | 70.3 |
| Example 1-11 | 15 | 52 | 8 | 0.33 | 3 | 2 | 0.63 | 182.8 | 64.8 |
| Example 1-12 | 15 | 52 | 8 | 0.33 | 5 | 2 | 0.88 | 182.8 | 62.9 |
| Example 1-13 | 15 | 52 | 8 | 0.33 | 1 | 0.1 | 0.14 | 182.8 | 64.7 |
| Example 1-14 | 15 | 52 | 8 | 0.33 | 1 | 1 | 0.25 | 182.8 | 68.8 |
| Example 1-15 | 15 | 52 | 8 | 0.33 | 1 | 3 | 0.50 | 182.8 | 77.2 |
| Example 1-16 | 15 | 52 | 8 | 0.33 | 1 | 6 | 0.88 | 182.8 | 66.1 |
| Example 1-17 | 15 | 52 | 8 | 0.33 | 1 | 8 | 1.13 | 182.8 | 63.5 |
| Comparative Example 1 | 0 | 60 | 0 | / | 0 | 0 | / | 180.0 | 53.2 |
| Comparative Example 2 | 2 | 59 | 1 | 2.95 | 0 | 0 | 0.00 | 180.5 | 52.3 |
| Comparative Example 3 | 2 | 59 | 1 | 2.95 | 0.3 | 0 | 0.30 | 180.5 | 54.7 |
| Comparative Example 4 | 2 | 59 | 1 | 2.95 | 0 | 2 | 2.00 | 180.5 | 56.5 |
| Comparative Example 5 | 1 | 59.5 | 0.5 | 5.95 | 5 | 8 | 26 | 180.1 | 50.1 |
| Note: "/"in Table 1 means that a corresponding parameter does not exist, and the mass ratio X in Table 1 refers to the mass ratio of $LiCoO_2$ and NiCOs. | | | | | | | | | |

It can be learned from Examples 1-1 to 1-17 and Comparative Examples 1 to 5 that in the lithium-ion batteries in the examples of this application, the positive electrode active materials contain Ni and the mass percentages B% of Ni are within the range of this application, the electrolytes include the lithium bis(oxalato)borate and the 1,3,6-hexanetricarbonitrile, and the values of the relation (C + D)/B of the mass percentages C% of the lithium bis(oxalato)borate, the mass percentages D% of the 1,3,6-hexanetricarbonitrile, and the mass percentages B% of Ni are within the range of this application; while the lithium-ion batteries in the comparative examples do not meet the foregoing characteristics simultaneously. Therefore, the lithium-ion batteries obtained in the examples have higher discharge gram capacity and higher discharge capacity retention rate, which indicates increased energy density and improved high-temperature cycling performance of the lithium-ion batteries, improving the comprehensive performance of the lithium-ion batteries.

The mass percentage A% of Co and the value of A/20B generally affect the comprehensive performance of

the lithium-ion battery. It can be learned from Examples 1-1 to 1-7 that when the mass percentage A% of Co and A/20B are within the ranges of this application, the obtained lithium-ion battery has higher discharge gram capacity and discharge capacity retention rate, which indicates higher energy density and better high-temperature cycling performance of the lithium-ion battery, namely, better comprehensive performance of the lithium-ion battery.

The mass percentage C% of the lithium bis(oxalato)borate generally affects the comprehensive performance of the lithium-ion battery. It can be learned from Examples 1-5 and 1-8 to 1-12 that when the mass percentage C% of the lithium bis(oxalato)borate is within the range of this application, the obtained lithium-ion battery has higher discharge gram capacity and discharge capacity retention rate, which indicates higher energy density and better high-temperature cycling performance of the lithium-ion battery, namely, better comprehensive performance of the lithium-ion battery.

The mass percentage D% of the 1,3,6-hexanetricarbonitrile generally affects the comprehensive performance of the lithium-ion battery. It can be learned from Examples 1-5 and 1-13 to 1-17 that when the mass percentage D% of the 1,3,6-hexanetricarbonitrile is within the range of this application, the obtained lithium-ion battery has higher discharge gram capacity and discharge capacity retention rate, which indicates higher energy density and better high-temperature cycling performance of the lithium-ion battery, namely, better comprehensive performance of the lithium-ion battery.

**Table 2**

| | Compound represented by formula (I) | E | Discharge gram capacity (mAh/g) | Discharge capacity retention rate (%) | Rss (mΩ) |
|---|---|---|---|---|---|
| Example 1-15 | / | / | 182.8 | 77.2 | 60.40 |
| Example 2-1 | I-1 | 0.05 | 182.9 | 78.3 | 59.20 |
| Example 2-2 | I-1 | 0.1 | 182.7 | 79.7 | 56.80 |
| Example 2-3 | I-1 | 0.2 | 182.8 | 80.1 | 50.20 |
| Example 2-4 | I-1 | 0.5 | 182.6 | 79.2 | 42.90 |
| Example 2-5 | I-1 | 1.0 | 182.9 | 77.8 | 35.10 |
| Example 2-6 | I-3 | 0.2 | 182.7 | 78.3 | 48.40 |
| Example 2-7 | I-10 | 0.2 | 182.8 | 77.5 | 53.90 |
| Note: "/" in Table 2 means that a corresponding parameter does not exist. | | | | | |

It can be learned from Examples 1-15 and 2-1 to 2-7 that further introducing the compound represented by formula (I) into the electrolyte that includes the lithium bis(oxalato)borate and the 1,3,6-hexanetricarbonitrile can further increase the discharge capacity retention rate of the lithium-ion battery and reduce Rss, with the discharge gram capacity remaining essentially unchanged, which indicates further improved high-temperature cycling performance and kinetic performance of the lithium-ion battery and higher energy density of the lithium-ion battery, further improving the comprehensive performance of the lithium-ion battery.

The mass percentage E% of the compound represented by formula (I) generally affects the comprehensive performance of the lithium-ion battery. It can be learned from Examples 2-1 to 2-5 that when the mass percentage E% of the compound represented by formula (I) is within the range of this application, the obtained lithium-ion battery has higher discharge gram capacity and discharge capacity retention rate and lower Rss, which indicates higher energy density and better high-temperature cycling performance and kinetic performance of the lithium-ion battery, namely, better comprehensive performance of the lithium-ion battery.

The type of the compound represented by formula (I) generally affects the comprehensive performance of the lithium-ion battery. It can be learned from Examples 2-3, 2-6, and 2-7 that when the type of the compound represented by formula (I) is within the range of this application, the obtained lithium-ion battery has higher discharge gram capacity and discharge capacity retention rate and lower Rss, which indicates higher energy density and better high-temperature cycling performance and kinetic performance of the lithium-ion battery, namely, better comprehensive performance of

the lithium-ion battery.

**Table 3**

| | Dinitrile compound | F | Polynitrile compound | G | F+G | Discharge gram capacity (mAh/g) | Discharge capacity retention rate (%) |
|---|---|---|---|---|---|---|---|
| Example 1-3 | / | 0 | / | 0 | / | 180.5 | 65.8 |
| Example 3-1 | Succinonitrile | 0.1 | / | 0 | 0.1 | 180.5 | 66.5 |
| Example 3-2 | Succinonitrile | 2 | / | 0 | 2 | 180.4 | 73.1 |
| Example 3-3 | Succinonitrile | 8 | / | 0 | 8 | 180.3 | 66.7 |
| Example 3-4 | Adiponitrile | 2 | / | 0 | 2 | 180.4 | 71.7 |
| Example 3-5 | Suberonitrile | 2 | / | 0 | 2 | 180.6 | 70.9 |
| Example 3-6 | / | 0 | II-1 | 0.1 | 0.10 | 180.5 | 66.1 |
| Example 3-7 | / | 0 | II-8 | 2 | 2 | 180.4 | 76.6 |
| Example 3-8 | / | 0 | II-9 | 8 | 8 | 180.3 | 66.4 |
| Example 3-9 | Succinonitrile | 0.1 | 1,3,6-hexanetricarbonitrile | 0.1 | 0.2 | 180.5 | 66.9 |
| Example 3-10 | Succinonitrile | 0.5 | 1,3,6-hexanetricarbonitrile | 0.5 | 1 | 180.5 | 70.2 |
| Example 3-11 | Succinonitrile | 2 | 1,3,6-hexanetricarbonitrile | 2 | 4 | 180.4 | 80.6 |
| Example 3-12 | Succinonitrile | 3 | 1,3,6-hexanetricarbonitrile | 3 | 6 | 180.4 | 81.1 |
| Example 3-13 | Succinonitrile | 4 | 1,3,6-hexanetricarbonitrile | 4 | 8 | 180.3 | 74.1 |
| Example 3-14 | Succinonitrile | 6 | 1,3,6-hexanetricarbonitrile | 6 | 12 | 180.1 | 66.5 |
| Note: "/" in Table 3 means that a corresponding parameter does not exist. | | | | | | | |

It can be learned from Examples 1-3 and 3-1 to 3-5 that further introducing the dinitrile compound into the electrolyte that includes the lithium bis(oxalato)borate and the 1,3,6-hexanetricarbonitrile can further increase the discharge capacity retention rate of the lithium-ion battery, with the discharge gram capacity remaining essentially unchanged, which indicates further improved high-temperature cycling performance of the lithium-ion battery and higher energy density of the lithium-ion battery, further improving the comprehensive performance of the lithium-ion battery.

The mass percentage F% of the dinitrile compound generally affects the comprehensive performance of the lithium-ion battery. It can be learned from Examples 3-1 to 3-3 that when the mass percentage F% of the dinitrile compound is within the range of this application, the obtained lithium-ion battery has higher discharge gram capacity and discharge capacity retention rate, which indicates higher energy density and better high-temperature cycling performance of the lithium-ion battery, namely, better comprehensive performance of the lithium-ion battery.

The type of the dinitrile compound generally affects the comprehensive performance of the lithium-ion battery. It can be learned from Examples 3-2, 3-4, and 3-5 that when the type of the dinitrile compound is within the range of

this application, the obtained lithium-ion battery has higher discharge gram capacity and discharge capacity retention rate, which indicates higher energy density and better high-temperature cycling performance of the lithium-ion battery, namely, better comprehensive performance of the lithium-ion battery.

It can be learned from Examples 1-3 and 3-6 to 3-8 that further introducing the polynitrile compound into the electrolyte that includes the lithium bis(oxalato)borate and the 1,3,6-hexanetricarbonitrile can further increase the discharge capacity retention rate of the lithium-ion battery, with the discharge gram capacity remaining essentially unchanged, which indicates further improved high-temperature cycling performance of the lithium-ion battery and higher energy density of the lithium-ion battery, further improving the comprehensive performance of the lithium-ion battery.

The mass percentage G% and type of the polynitrile compound generally affect the comprehensive performance of the lithium-ion battery. It can be learned from Examples 3-6 to 3-8 that when the mass percentage G% and type of the polynitrile compound are within the ranges of this application, the obtained lithium-ion battery has higher discharge gram capacity and discharge capacity retention rate, which indicates higher energy density and better high-temperature cycling performance of the lithium-ion battery, namely, better comprehensive performance of the lithium-ion battery.

The value of F + G generally affects the comprehensive performance of the lithium-ion battery. It can be learned from Examples 3-9 to 3-14 that when the value of F + G is within the range of this application, the obtained lithium-ion battery has higher discharge gram capacity and discharge capacity retention rate, which indicates higher energy density and better high-temperature cycling performance of the lithium-ion battery, namely, better comprehensive performance of the lithium-ion battery.

**Table 4**

| | Positive electrode active material | Element M | y | A | B | Discharge gram capacity (mAh/g) | Discharge capacity retention rate (%) |
|---|---|---|---|---|---|---|---|
| Example 1-5 | $LiCo_{0.85}Ni_{0.15}O_2$ | / | / | 50.1 | 8.8 | 182.8 | 64.2 |
| Example 4-1 | $LiCo_{0.83}Ni_{0.15}Mn_{0.02}O_2$ | Mn | 0.02 | 49.0 | 8.8 | 181.1 | 66.8 |
| Example 4-2 | $LiCo_{0.83}Ni_{0.15}Al_{0.02}O_2$ | Al | 0.02 | 49.3 | 8.9 | 182.4 | 64.8 |
| Example 4-3 | $LiCo_{0.83}Ni_{0.15}Mg_{0.02}O_2$ | Mg | 0.02 | 49.3 | 8.9 | 182.6 | 65.2 |

The type of the positive electrode active material generally affects the comprehensive performance of the lithium-ion battery. It can be learned from Examples 1-5 and 4-1 to 4-3 that when the type of the positive electrode active material is within the range of this application, the obtained lithium-ion battery has higher discharge gram capacity and discharge capacity retention rate, which indicates higher energy density and better high-temperature cycling performance of the lithium-ion battery, namely, better comprehensive performance of the lithium-ion battery.

It should be noted that in this specification, the terms "include", "comprise", or any of their variants are intended to cover a non-exclusive inclusion, such that a process, method, article, or device that includes a series of elements includes not only those elements but also other elements that are not expressly listed, or further includes elements inherent to such process, method, article, or device.

The embodiments in this specification are described in a related manner. For a part that is the same or similar between the embodiments, reference may be made between the embodiments. Each embodiment focuses on differences from other embodiments.

The foregoing descriptions are merely preferred embodiments of this application, and are not intended to limit the protection scope of this application. Any modification, equivalent replacement, improvement, or the like made without departing from the spirit and principle of this application shall fall within the protection scope of this application.

## Claims

**1.** An electrochemical apparatus, comprising a positive electrode plate and an electrolyte; **characterized in that**,

the positive electrode plate comprises a positive electrode current collector and a positive electrode material

layer disposed on at least one surface of the positive electrode current collector, the positive electrode material layer comprises a positive electrode active material, and the positive electrode active material contains cobalt and nickel; wherein based on a mass of the positive electrode active material, a mass percentage of the nickel is B%, wherein $0.05 \le B \le 20$; and

the electrolyte comprises lithium bis(oxalato)borate and 1,3,6-hexanetricarbonitrile; wherein based on a mass of the electrolyte, a mass percentage of the lithium bis(oxalato)borate is C% and a mass percentage of the 1,3,6-hexanetricarbonitrile is D%; wherein

$$0.1 \le (C + D)/B \le 23.$$

2. The electrochemical apparatus according to claim 1, **characterized in that**, $0.1 \le B \le 10$, and/or $0.1 \le (C + D)/B \le 4.6$.

3. The electrochemical apparatus according to claim 1, **characterized in that**, based on the mass of the positive electrode active material, a mass percentage of the cobalt is A%, wherein $40 \le A \le 60$, and/or $0.1 \le A/20B \le 30$.

4. The electrochemical apparatus according to claim 3, **characterized in that**, $0.1 \le A/20B \le 3$.

5. The electrochemical apparatus according to claim 1, **characterized in that**, $0.05 \le C \le 5$, and/or $0.1 \le D \le 8$.

6. The electrochemical apparatus according to claim 1, **characterized in that**, the positive electrode active material comprises $Li_{\alpha}Co_{1-x-y}Ni_xM_yO_{\beta}$, wherein $0.95 \le \alpha \le 1.4$, $0.0005 < x \le 0.4$, $0 \le y \le 0.02$, and $1.90 \le \beta \le 2.10$; and M comprises at least one of Mg, Al, Ca, Ti, Zr, V, Cr, Fe, Mn, Cu, Zn, Rb, or Sn.

7. The electrochemical apparatus according to claim 1, **characterized in that**, the electrolyte further comprises a compound represented by formula (I):

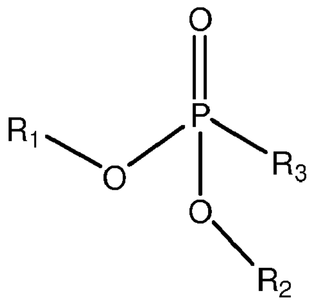

formula (I),

wherein $R_1$, $R_2$, and $R_3$ are each independently selected from substituted or unsubstituted C1 to C10 alkyl group, substituted or unsubstituted C1 to C10 unsaturated alkyl group, substituted or unsubstituted C1 to C10 alkoxy group, substituted or unsubstituted C2 to C10 alkoxyalkyl group, substituted or unsubstituted C2 to C10 heterocycloalkyl group, substituted or unsubstituted C1 to C10 carbonyl group, and substituted or unsubstituted C2 to C10 ester group, wherein when the foregoing groups are substituted, a substituent group is fluorine atom or cyano group; and heteroatom in the heterocycloalkyl group is selected from oxygen atom; and

based on the mass of the electrolyte, a mass percentage of the compound represented by formula (I) is E%, wherein $0.05 \le E \le 1$.

8. The electrochemical apparatus according to claim 7, **characterized in that**, the compound represented by formula (I) comprises at least one of the following compounds:

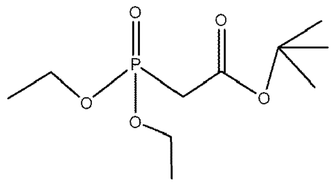

formula (I-1),

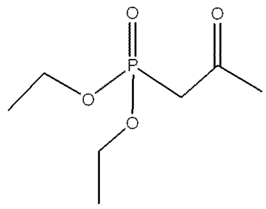

formula (I-2),

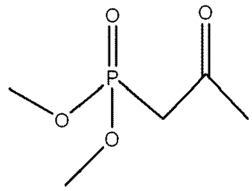

formula (I-3),

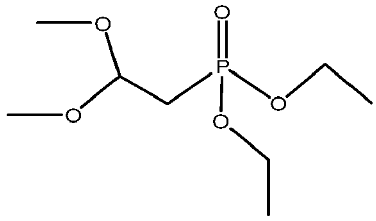

formula (I-4),

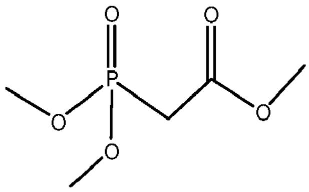

formula (I-5),

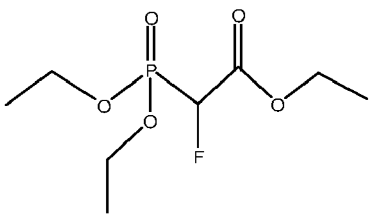

formula (I-6),

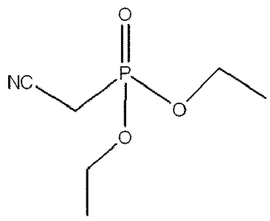

formula (I-7),

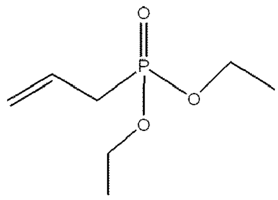

formula (I-8),

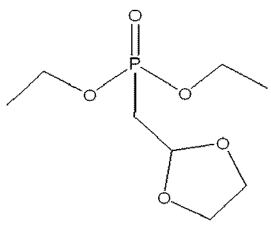

formula (I-9), or

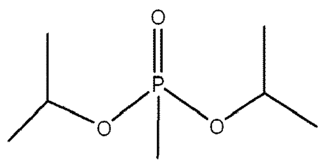

formula (I-10).

**9.** The electrochemical apparatus according to claim 1, satisfying at least one of the following characteristics:

(1) the electrolyte further comprises a dinitrile compound, wherein the dinitrile compound comprises at least one of malononitrile, succinonitrile, glutaronitrile, adiponitrile, suberonitrile, terephthalonitrile, tetradecanedinitrile, azomalononitrile, methyleneglutaronitrile, or pentenedinitrile; and based on the mass of the electrolyte, a mass percentage of the dinitrile compound is F%, wherein $0.1 \leq F \leq 8$; or

(2) the electrolyte further comprises a polynitrile compound, wherein the polynitrile compound comprises at

least one of the following compounds:

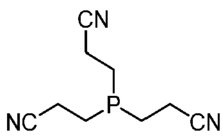 (II-1), 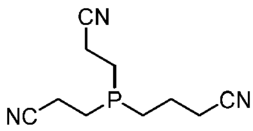 (II-2), 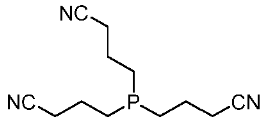 (II-3),

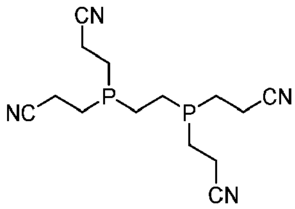 (II-4), 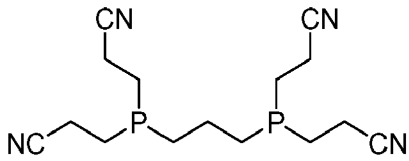 (II-5),

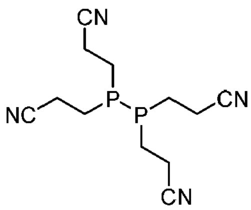 (II-6), 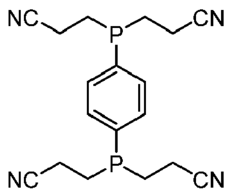 (II-7),

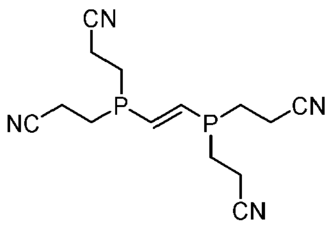 (II-8), 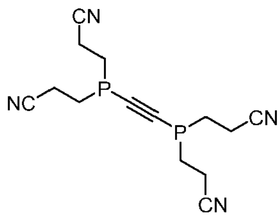 (II-9),

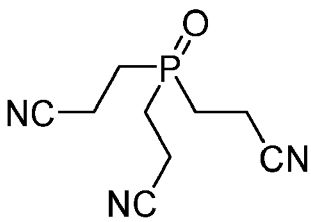 (II-10), 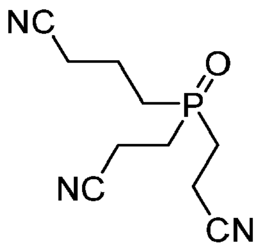 (II-11),

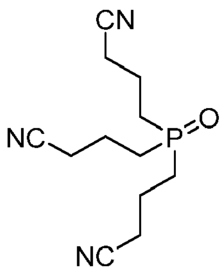 (II-12), 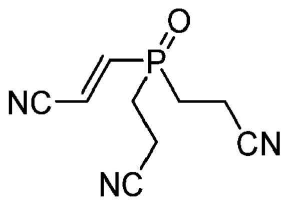 (II-13),

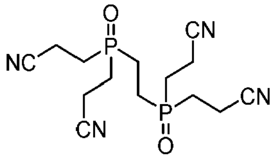 (II-14), 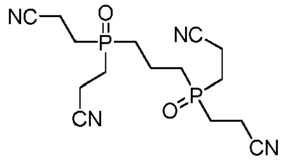 (II-15),

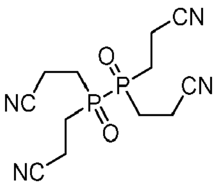 (II-16), 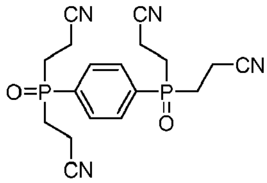 (II-17),

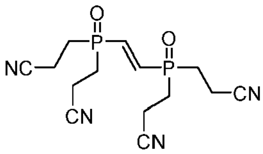 (II-18), 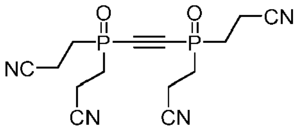 (II-19),

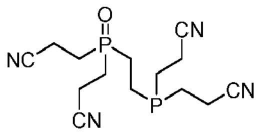 (II-20), 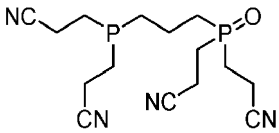 (II-21),

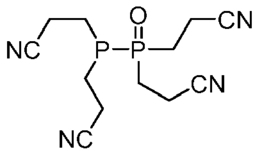 (II-22), 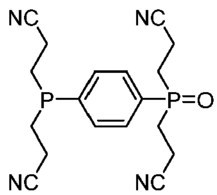 (II-23),

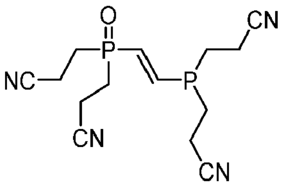 (II-24), or 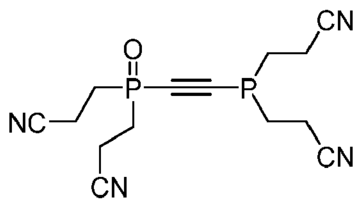 (II-25);

and

based on the mass of the electrolyte, a mass percentage of the polynitrile compound is G%, wherein $0.1 \leq G \leq 8$.

**10.** The electrochemical apparatus according to claim 9, **characterized in that**, $0.1 \leq F + G \leq 8$.

**11.** The electrochemical apparatus according to any one of claims 1 to 10, **characterized in that**, the electrolyte comprises a lithium salt and an organic solvent; wherein

the lithium salt comprises at least one of lithium hexafluorophosphate, lithium bistrifluoromethanesulfonimide, lithium bis(fluorosulfonyl)imide, lithium tetrafluoroborate, lithium bis(oxalato)borate, lithium difluoro(oxalato)borate, or lithium difluorophosphate; and based on the mass of the electrolyte, a mass percentage of the lithium salt is H%, wherein $8 \leq H \leq 20$; and

the organic solvent comprises a carbonate compound and a carboxylate compound, wherein the carbonate

compound comprises at least one of ethylene carbonate, propylene carbonate, butylene carbonate, dimethyl carbonate, ethyl methyl carbonate, diethyl carbonate, dipropyl carbonate, methyl propyl carbonate, ethyl propyl carbonate, dioctyl carbonate, dipentyl carbonate, ethyl isobutyl carbonate, isopropyl methyl carbonate, di-n-butyl carbonate, diisopropyl carbonate, or propyl carbonate, and the carboxylate compound comprises at least one of methyl acetate, ethyl acetate, propyl acetate, ethyl propionate, propyl propionate, butyl propionate, or amyl propionate; and based on the mass of the electrolyte, a mass percentage of the organic solvent is 67% to 90%, a mass percentage of the carbonate compound is J%, and a mass percentage of the carboxylate compound is K%, wherein $14 \leq J \leq 90$ and $0 \leq K \leq 60$.

**12.** An electronic apparatus, comprising the electrochemical apparatus according to any one of claims 1 to 11.